# EUROPÄISCHE PATENTANMELDUNG

(11) **EP 4 717 570 A1**
(43) Veröffentlichungstag der Anmeldung: **01.04.2026**
(21) Anmeldenummer: 24202491.7
(22) Anmeldetag: 25.09.2024
(51) Int. Cl.: B62J 11/10, B62J 15/00

(54) **RADSCHÜTZER FÜR EIN FAHRRAD UND RADSCHUTZVORRICHTUNG MIT EINEM DERARTIGEN RADSCHÜTZER**

(71) Anmelder: SKS metaplast Scheffer-Klute GmbH, 59846 Sundern (DE)
(72) Erfinder: Tobias, Hermes, 59757 Arnsberg (DE); Nikolas, Bosen, 59846 Sundern (DE); Henry, Schmidt, 59889 Eslohe (DE)
(74) Vertreter: Fritz Patent- und Rechtsanwälte PartmbB

(57) **Zusammenfassung**

Radschützer (1) für ein Fahrrad, der dazu eingerichtet ist, so an dem Fahrrad angebracht zu werden, dass er sich zumindest abschnittsweise oberhalb eines Rades des Fahrrads erstreckt, wobei der Radschützer (1) langgestreckt ist und eine zu der Längserstreckung senkrechte Querrichtung aufweist, wobei der Radschützer (1) mindestens eine Hohlkammer (6) umfasst, die sich in Richtung der Längserstreckung des Radschützers (1) erstreckt, und wobei der Radschützer (1) eine zumindest teilweise offen ausgebildete Kabelaufnahme (4) für ein Kabel (3) umfasst, die im am Fahrrad angebrachten Zustand des Radschützers (1) auf der dem Rad zugewandten Seite des Radschützers (1) außerhalb der mindestens einen Hohlkammer (6) angeordnet ist.

## Beschreibung

Die vorliegende Erfindung betrifft einen Radschützer für ein Fahrrad gemäß dem Oberbegriff des Anspruchs 1 sowie eine Radschutzvorrichtung mit einem derartigen Radschützer.

Definition: Der Begriff Fahrrad soll sämtliche Varianten von Fahrrädern umfassen, insbesondere auch Fahrräder mit Elektromotoren und Fahrräder mit mehr als zwei Rädern wie beispielsweise Lastenfahrräder.

Ein Radschützer der vorgenannten Art ist aus der EP 3 000 701 A1 bekannt. Der darin beschriebene Radschützer ist zur Abdeckung wenigstens eines zugeordneten Rades eines Fahrrads in einem Abstand zu einem Außenumfang des Rades anzuordnen. Dabei ist der Radschützer als Strangprofil ausgebildet ist. Der Radschützer weist eine bogenförmig verlaufende Außenwand und eine ebenfalls bogenförmig verlaufende Innenwand auf, wobei die Außenwand und die Innenwand an ihren Seitenrändern miteinander einstückig sind und einen Hohlraum umgeben, der durch Trennwände in mehrere Hohlkammern unterteilt ist, die nebeneinander angeordnet sind. Die Hohlkammern sind zur Aufnahme von elektrischen Leitungen ausgelegt. Dazu sind die Hohlkammern durch Bohrungen in der Außenwand beziehungsweise der Innenwand zugänglich, so dass beispielsweise Leitungen der Fahrradbeleuchtung einfach in den Radschützer integriert werden können.

Die Hohlkammern werden bei diesem Stand der Technik sowohl zur Erhöhung der Bauteilsteifigkeit als auch zur Kabelführung genutzt. Als nachteilig dabei ist anzusehen, dass zum Ein- und Ausfädeln von elektrischen Leitungen das die Hohlkammern bildende Profil angebohrt werden muss. Weiterhin kann sich in Abhängigkeit von der Größe und der Anzahl der Bohrungen eine Verringerung der Stabilität des Radschützers ergeben. Weiterhin erweist sich bei kleinen Durchmessern der Bohrungen das Hindurchführen der Kabel durch die Bohrungen in die Hohlkammern als vergleichsweise mühselig.

Das der vorliegenden Erfindung zugrundeliegende Problem ist daher die Schaffung eines Radschützers und einer Radschutzvorrichtung der eingangs genannten Art, die stabiler sind und/oder bei denen Kabel einfacher an oder in dem Radschützer angebracht werden können.

Dies wird erfindungsgemäß durch einen Radschützer der eingangs genannten Art mit den kennzeichnenden Merkmalen des Anspruchs 1 sowie durch eine Radschutzvorrichtung mit den Merkmalen des Anspruchs 10 erreicht. Die Unteransprüche betreffen bevorzugte Ausgestaltungen der Erfindung.

Gemäß Anspruch 1 ist vorgesehen, dass der Radschützer eine zumindest teilweise offen ausgebildete Kabelaufnahme für ein Kabel umfasst, die im am Fahrrad angebrachten Zustand des Radschützers auf der dem Rad zugewandten Seite des Radschützers außerhalb der mindestens einen Hohlkammer angeordnet ist. Die dadurch erreichte Trennung der mindestens einen Hohlkammer von der Kabelaufnahme ergibt einerseits eine erhöhte Stabilität beziehungsweise Steifigkeit des Radschützers und andererseits eine einfachere Anbringung von Kabeln an dem Radschützer. Insbesondere kann ein Kabel einfach in die zumindest teilweise offene Kabelaufnahme eingebracht werden.

Es kann vorgesehen sein, dass der Radschützer zwei in Querrichtung des Radschützers zueinander beabstandete Hohlkammern umfasst, die sich in Richtung der Längserstreckung des Radschützers erstrecken. Dabei kann die Kabelaufnahme in Querrichtung des Radschützers zwischen den beiden Hohlkammern angeordnet sein.

Die beiden Hohlkammern können sich insbesondere angrenzend an die Längsseiten des Radschützers erstrecken und auf diese Weise die gewünschte Steifigkeit des Radschützers gewährleisten.

Es besteht die Möglichkeit, dass der Radschützer eine Basis aufweist, die langgestreckt ist und eine zu der Richtung der Längserstreckung des Radschützers parallele Längsrichtung aufweist, insbesondere wobei die Basis des Radschützers sich in ihrer Längsrichtung zumindest abschnittsweise in Umfangsrichtung des Rades des Fahrrads erstreckt, vorzugsweise wobei die Basis des Radschützers zumindest abschnittsweise teiltorusförmig ausgebildet ist.

Es kann vorgesehen sein, dass die Kabelaufnahme mindestens eine Halterung für eine Befestigungsklammer aufweist. Insbesondere kann die Kabelaufnahme eine erste Halterung und eine zu der ersten Halterung in Querrichtung des Radschützers beabstandete zweite Halterung aufweisen. Weiterhin kann die mindestens eine Halterung zumindest abschnittsweise als stegförmige, sich von der Basis wegerstreckende Rippe ausgebildet sein, wobei die Rippe auf der von der Basis abgewandten Seite eine Verdickung aufweisen kann.

Es kann weiterhin vorgesehen sein, dass sich die die Halterungen bildenden Rippen in Längsrichtung der Basis des Radschützers erstrecken, insbesondere wobei die Rippen sich über mehr als die Hälfte der Länge der Basis, vorzugsweise über mehr als drei Viertel der Länge der Basis, beispielsweise über die gesamte Länge der Basis des Radschützers erstrecken. Durch eine derartige große Erstreckung der Rippen über die Länge der Basis können mehrere Befestigungsklammern über die Längserstreckung des Radschützers beabstandet zueinander verteilt werden, so dass sich eine bessere Halterung eines in der Kabelaufnahme befindlichen Kabels ergibt.

Es besteht die Möglichkeit, dass der Radschützer zumindest teilweise als Extrusionsteil aus Kunststoff oder als Strangpressprofil aus Metall, insbesondere aus Aluminium, ausgebildet ist. Beide Varianten erlauben eine einfache Fertigung des Radschützers.

Gemäß Anspruch 10 umfasst die Radschutzvorrichtung einen erfindungsgemäßen Radschützer und mindestens eine Befestigungsklammer, die dazu eingerichtet ist, so mit der mindestens einen Halterung verbunden zu werden, dass ein in die Kabelaufnahme eingebrachtes Kabel in dem Zwischenraum zwischen der Basis und der Befestigungsklammer gehalten wird. Mit einer derartigen Befestigungsklammer kann ein in die zumindest teilweise offene Kabelaufnahme eingebrachtes Kabel sicher in der Kabelaufnahme gehalten werden.

Es kann vorgesehen sein, dass die mindestens eine Befestigungsklammer mindestens eine Aufnahme für eine der Halterungen aufweist, insbesondere wobei die mindestens eine Befestigungsklammer zwei zueinander beabstandete Aufnahmen aufweist, von denen eine erste die erste Halterung und eine zweite die zweite Halterung aufnehmen kann. Dabei kann die mindestens eine Befestigungsklammer dazu eingerichtet sein, so mit den beiden Halterungen verbunden zu werden, dass ein in die Kabelaufnahme eingebrachtes Kabel in dem Zwischenraum zwischen den beiden Halterungen, der Basis und der Befestigungsklammer gehalten wird. Dadurch wird zumindest abschnittsweise ein allseits geschlossener Aufnahmeraum geschaffen, in dem das Kabel sicher gehalten ist.

Es besteht die Möglichkeit, dass die mindestens eine Aufnahme der mindestens einen Befestigungsklammer mindestens ein Rastelement aufweist, das dazu eingerichtet ist, die Verdickung der mindestens einen Halterung rastend zu hintergreifen. Dadurch entsteht eine formschlüssige Verbindung zwischen dem mindestens einen Rastelement und der Verdickung der die Halterung bildenden Rippe. Insbesondere ist das mindestens eine Rastelement elastisch formbar ausgebildet, so dass es sich bei dem Aufstecken auf die Rippe verformt und dann einrastet.

Es kann vorgesehen sein, dass die mindestens eine Befestigungsklammer zumindest teilweise aus Kunststoff besteht, insbesondere als Kunststoff-Spritzgussteil ausgebildet ist, oder dass die die mindestens Befestigungsklammer zumindest teilweise aus Metall besteht, insbesondere als Stanzbiegeteil aus Federstahl ausgebildet ist.

Es besteht die Möglichkeit, dass die Radschutzvorrichtung eine Mehrzahl von Befestigungsklammern umfasst, insbesondere wobei die Radschutzvorrichtung dazu eingerichtet ist, dass die Befestigungsklammern im am Fahrrad angebrachten Zustand des Radschützers in Längsrichtung der Basis des Radschützers voneinander beabstandet sind. Durch die Mehrzahl der beabstandet zueinander angeordneten Befestigungsklammern ergibt sich eine bessere Halterung eines in der Kabelaufnahme befindlichen Kabels.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine perspektivische Explosionsansicht einer erfindungsgemäßen Radschutzvorrichtung mit einem Kabel;
- Fig. 2: eine Seitenansicht der Radschutzvorrichtung und des Kabels gemäß Fig. 1;
- Fig. 3: eine Ansicht von unten auf die Radschutzvorrichtung und das Kabel gemäß Fig. 1;
- Fig. 4: eine Seitenansicht eines Details der Radschutzvorrichtung und des Kabels gemäß Fig. 1 ;
- Fig. 5: eine teilweise geschnittene Ansicht gemäß den Pfeilen V-V in Fig. 4;
- Fig. 6: ein Detail gemäß dem Pfeil VI in Fig. 5;
- Fig. 7: eine perspektivische Explosionsansicht eines Details der Radschutzvorrichtung gemäß Fig. 1;
- Fig. 8: eine Ansicht von unten auf das Detail gemäß Fig. 7;
- Fig. 9: eine Seitenansicht einer Befestigungsklammer der Radschutzvorrichtung gemäß Fig. 1;
- Fig. 10: eine Draufsicht auf die Befestigungsklammer gemäß Fig. 9;
- Fig. 11: eine Vorderansicht der Befestigungsklammer gemäß Fig. 9.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiele aufweist.

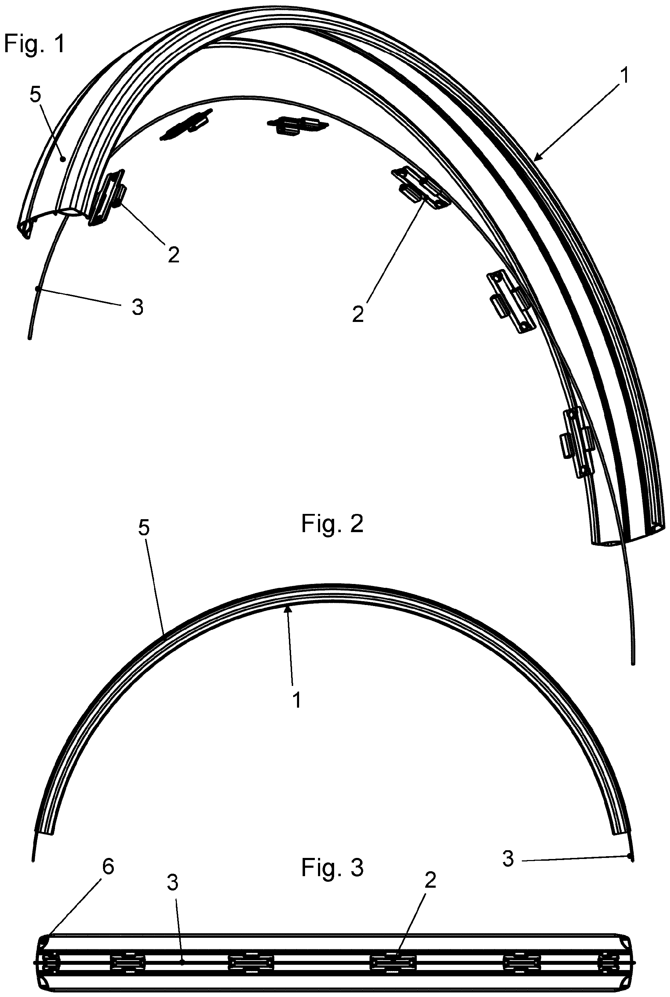

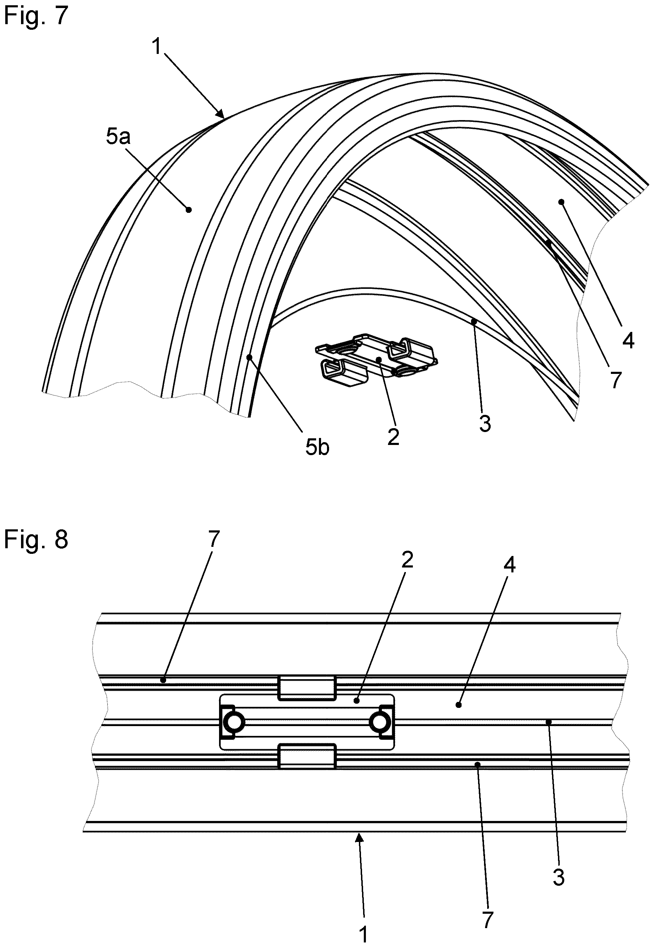

Die in den Figuren abgebildete Ausführungsform einer Radschutzvorrichtung umfasst einen Radschützer 1 und eine Mehrzahl von Befestigungsklammern 2, die zusammen mit dem Radschützer 1 ein Kabel 3 in einer Kabelaufnahme 4 halten können (siehe beispielsweise Fig. 1, Fig. 5 und Fig. 7).

Der Radschützer 1 ist als Kunststoff-Extrusionsteil ausgebildet. Alternativ kann der Radschützer 1 als Strangpressprofil aus Metall, insbesondere aus Aluminium, ausgebildet sein. Es besteht durchaus die Möglichkeit, den Radschützer 1 durch ein anderes Fertigungsverfahren herzustellen.

Der Radschützer 1 ist als Radschützer für ein Hinterrad eines Fahrrads ausgebildet. Es besteht jedoch durchaus auch die Möglichkeit, den Radschützer 1 für ein Vorderrad eines Fahrrads vorzusehen.

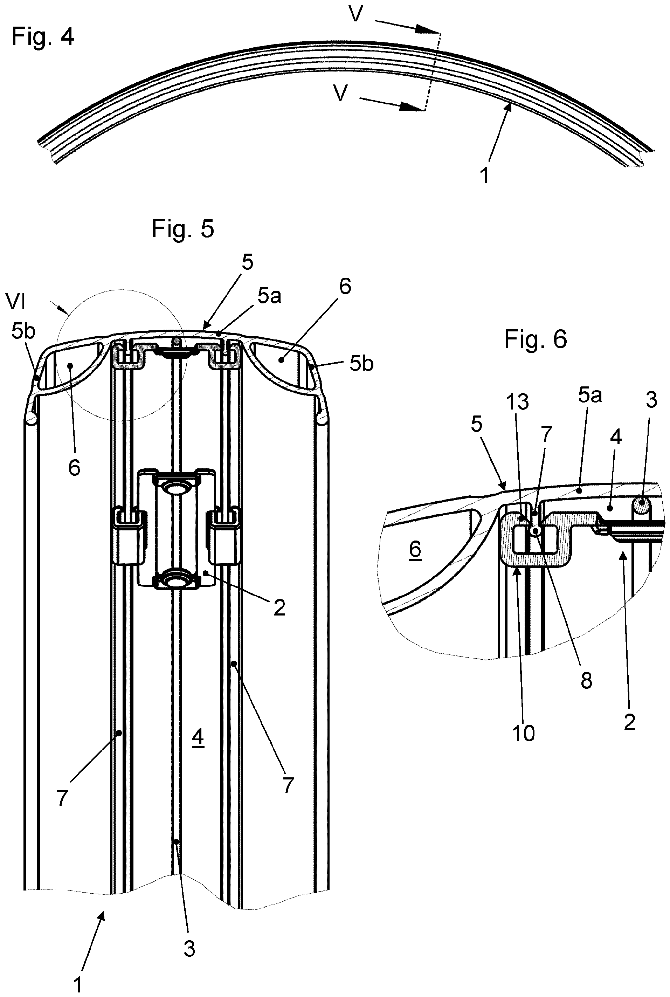

Der Radschützer 1 weist eine Basis 5 auf, die teiltorusförmig ausgebildet ist und abschnittsweise der Kontur eines Rades des Fahrrads folgt (siehe Fig. 1). Die Basis 5 und damit der Radschützer 1 sind langgestreckt, wobei ihre Längsrichtung beziehungsweise Längserstreckung im Wesentlichen der Umfangsrichtung des nicht abgebildeten Rades entspricht. Aufgrund der teiltorusförmigen Ausbildung weist die Basis 5 einen im Wesentlichen C-förmigen Querschnitt, mit einem mittleren Abschnitt 5a und zwei seitlichen Abschnitten 5b auf (siehe Fig. 5).

Der Radschützer 1 weist zwei Hohlkammern 6 auf, die sich jeweils mit im Wesentlichen unverändertem Querschnitt über die gesamte Länge des Radschützers 1 erstrecken. Die Hohlkammern 6 ragen von der Basis 5 nach innen beziehungsweise im am Fahrrad angebrachten Zustand in Richtung auf das nicht abgebildete Rad des Fahrrads. Die Hohlkammern 6 erstrecken sich angrenzend an die von den seitlichen Abschnitten 5b der Basis 5 gebildeten Längsseiten des Radschützers 1. Dabei sind die Hohlkammern 6 in Querrichtung der Basis 5 beziehungsweise in Querrichtung des Radschützers 1 voneinander beabstandet, wobei zwischen den Hohlkammern 6 die Kabelaufnahme 4 angeordnet ist.

Von der Basis 5 ragen zwei von der Kabelaufnahme 4 umfasste, als Halterungen für die Befestigungsklammern 2 dienende Rippen 7 nach innen beziehungsweise im montierten Zustand in Richtung auf das nicht abgebildete Rad des Fahrrads. Die Rippen 7 sind in Querrichtung der Basis 5 voneinander beabstandet, so dass zwischen ihnen ein Aufnahmeraum der Kabelaufnahme 4 entsteht. Die als Halterungen dienenden Rippen 7 erstrecken sich dabei in Längsrichtung der Basis 5 im Wesentlichen über die gesamte Länge der Basis 5 (siehe beispielsweise Fig. 1). Die Rippen 7 sind stegförmig ausgebildet und weisen auf der von der Basis 5 abgewandten Seite eine Verdickung 8 auf (siehe Fig. 6).

Die Befestigungsklammern 2 bestehen zumindest teilweise aus Kunststoff und sind insbesondere als Kunststoff-Spritzgussteil ausgebildet. Alternativ kann vorgesehen sein, dass die Befestigungsklammern 2 zumindest teilweise aus Metall bestehen, wobei sie insbesondere als Stanzbiegeteil aus Federstahl ausgebildet sein können.

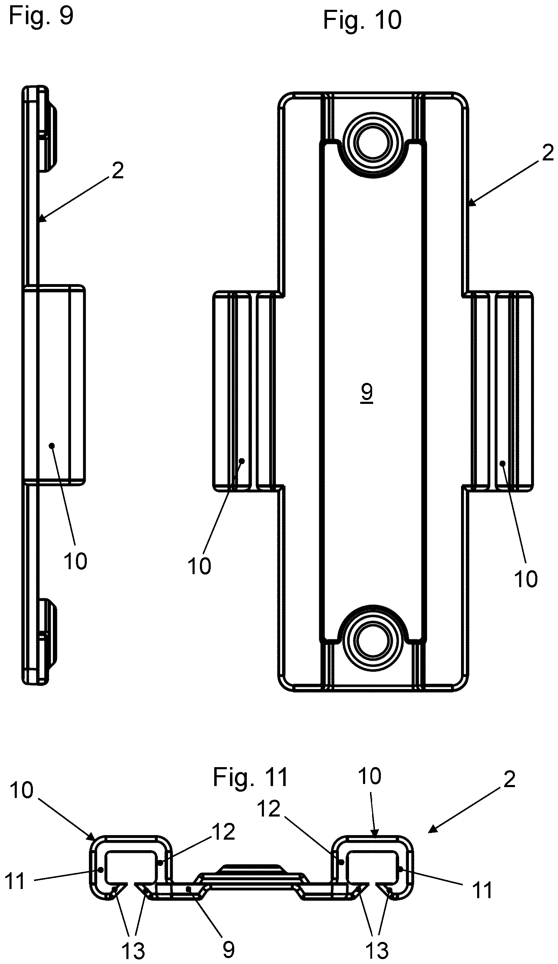

Die aus Fig. 9 bis Fig. 11 detailliert ersichtliche Befestigungsklammer 2 weist einen flächigen Abschnitt 9 auf, der langgestreckt und wie aus Fig. 10 ersichtlich etwa zwei- bis dreimal so lang wie breit ist. Es besteht durchaus die Möglichkeit, den flächigen Abschnitt 9 kürzer oder länger zu gestalten. Es kann dabei beispielsweise vorgesehen sein, mindestens eine lange Befestigungsklammer 2 anstelle einer Mehrzahl kurzer Befestigungsklammern 2 vorzusehen.

Die Befestigungsklammer 2 weist weiterhin zwei Aufnahmen 10 auf, die jeweils in der Mitte der einander gegenüberliegenden Längsseiten des flächigen Abschnitts 9 angeordnet sind. Eine jede der Aufnahmen 10 weist einen im Wesentlichen U-förmigen Querschnitt mit zwei U-Schenkel 11, 12 auf, wobei jeweils der innere U-Schenkel 12 in den flächigen Abschnitt 9 der Befestigungsklammer 2 übergeht (siehe Fig. 11).

Die U-Schenkel 11, 12 weisen jeweils endseitig einen als Rastelement 13 dienenden spitzzulaufenden Vorsprung auf. Die Rastelemente 13 sind elastisch formbar ausgebildet.

Es besteht durchaus die Möglichkeit, beispielsweise bei langen Befestigungsklammern 2 mehr als zwei Aufnahmen 10 pro Befestigungsklammer 2 vorzusehen. Dabei können dann zwei oder mehr Aufnahmen 10 an jeder der einander gegenüberliegenden Längsseiten des flächigen Abschnitts 9 angeordnet sein.

Nach Einbringung eines Kabels 3 in die Kabelaufnahme 4 werden die Befestigungsklammern 2 an der Innenseite des Radschützers 1 angebracht. Dazu werden jeweils die beiden Aufnahmen 10 auf die als Klammerhalterungen dienenden Rippen 7 aufgeschoben (siehe Fig. 5 und Fig. 6). Dabei hintergreifen die Rastelemente 13 jeweils die Verdickung 8 der als Halterung dienenden Rippe 7. Dadurch entsteht jeweils eine formschlüssige Verbindung zwischen dem Rastelement 13 und der Verdickung 8 der die Halterung bildenden Rippe 7. Durch die Elastizität der Rastelemente 13 können diese sich bei dem Aufstecken auf die Rippe 7 verformen und dann hinter der Verdickung 8 einrasten.

Wie Fig. 5 und Fig. 6 zeigen ist das Kabel 3 im montierten Zustand auf zwei Seiten von den als Halterungen dienenden Rippen 7, oben von der Basis 5 und unten von den Befestigungsklammern 2 umgeben. Nach Abziehen der Befestigungsklammern 2 von dem Radschützer 1 kann das Kabel 3 wieder aus der Kabelaufnahme 4 herausgenommen werden.

## Patentansprüche

1. Radschützer (1) für ein Fahrrad, der dazu eingerichtet ist, so an dem Fahrrad angebracht zu werden, dass er sich zumindest abschnittsweise oberhalb eines Rades des Fahrrads erstreckt, wobei der Radschützer (1) langgestreckt ist und eine zu der Längserstreckung senkrechte Querrichtung aufweist, und wobei der Radschützer (1) mindestens eine Hohlkammer (6) umfasst, die sich in Richtung der Längserstreckung des Radschützers (1) erstreckt, **dadurch gekennzeichnet, dass** der Radschützer (1) eine zumindest teilweise offen ausgebildete Kabelaufnahme (4) für ein Kabel (3) umfasst, die im am Fahrrad angebrachten Zustand des Radschützers (1) auf der dem Rad zugewandten Seite des Radschützers (1) außerhalb der mindestens einen Hohlkammer (6) angeordnet ist.

2. Radschützer (1) nach Anspruch 1, **dadurch gekennzeichnet, dass** der Radschützer (1) zwei in Querrichtung des Radschützers (1) zueinander beabstandete Hohlkammern (6) umfasst, die sich in Richtung der Längserstreckung des Radschützers (1) erstrecken.

3. Radschützer (1) nach Anspruch 2, **dadurch gekennzeichnet, dass** die Kabelaufnahme (4) in Querrichtung des Radschützers (1) zwischen den beiden Hohlkammern (6) angeordnet ist.

4. Radschützer (1) nach einem der Ansprüche 1 bis 3, **dadurch gekennzeichnet, dass** der Radschützer (1) eine Basis (5) aufweist, die langgestreckt ist und eine zu der Richtung der Längserstreckung des Radschützers (1) parallele Längsrichtung aufweist, insbesondere wobei die Basis (5) des Radschützers (1) sich in ihrer Längsrichtung zumindest abschnittsweise in Umfangsrichtung des Rades des Fahrrads erstreckt, vorzugsweise wobei die Basis (5) des Radschützers (1) zumindest abschnittsweise teiltorusförmig ausgebildet ist.

5. Radschützer (1) nach einem der Ansprüche 1 bis 4, **dadurch gekennzeichnet, dass** die Kabelaufnahme (4) mindestens eine Halterung für eine Befestigungsklammer (2) aufweist.

6. Radschützer (1) nach Anspruch 5, **dadurch gekennzeichnet, dass** die Kabelaufnahme (4) eine erste Halterung und eine zu der ersten Halterung in Querrichtung des Radschützers (1) beabstandete zweite Halterung aufweist.

7. Radschützer (1) nach einem der Ansprüche 5 oder 6, **dadurch gekennzeichnet, dass** die mindestens eine Halterung zumindest abschnittsweise als stegförmige, sich von der Basis (6) wegerstreckende Rippe (7) ausgebildet ist.

8. Radschützer (1) nach Anspruch 7, **dadurch gekennzeichnet, dass** die Rippe (7) auf der von der Basis (6) abgewandten Seite eine Verdickung (8) aufweist.

9. Radschützer (1) nach einem der Ansprüche 1 bis 8, **dadurch gekennzeichnet, dass** der Radschützer (1) zumindest teilweise als Extrusionsteil aus Kunststoff oder als Strangpressprofil aus Metall, insbesondere aus Aluminium, ausgebildet ist.

10. Radschutzvorrichtung für ein Fahrrad, umfassend einen Radschützer (1) nach einem der Ansprüche 1 bis 9 und mindestens eine Befestigungsklammer (2), die dazu eingerichtet ist, so mit der mindestens einen Halterung verbunden zu werden, dass ein in die Kabelaufnahme (4) eingebrachtes Kabel (3) in dem Zwischenraum zwischen der Basis (5) und der Befestigungsklammer (2) gehalten wird.

11. Radschutzvorrichtung nach Anspruch 10, **dadurch gekennzeichnet, dass** die mindestens eine Befestigungsklammer (2) mindestens eine Aufnahme (10) für eine der Halterungen aufweist, insbesondere wobei die mindestens eine Befestigungsklammer (2) zwei zueinander beabstandete Aufnahmen (10) aufweist, von denen eine erste die erste Halterung und eine zweite die zweite Halterung aufnehmen kann.

12. Radschutzvorrichtung nach Anspruch 11, **dadurch gekennzeichnet, dass** die mindestens eine Befestigungsklammer (2) dazu eingerichtet ist, so mit den beiden Halterungen verbunden zu werden, dass ein in die Kabelaufnahme (4) eingebrachtes Kabel (3) in dem Zwischenraum zwischen den beiden Halterungen, der Basis (5) und der Befestigungsklammer (2) gehalten wird.

13. Radschutzvorrichtung nach einem der Ansprüche 11 oder 12, **dadurch gekennzeichnet, dass** die mindestens eine Aufnahme (10) der mindestens einen Befestigungsklammer (2) mindestens ein Rastelement (13) aufweist, das dazu eingerichtet ist, die Verdickung (8) der mindestens einen Halterung rastend zu hintergreifen.

14. Radschutzvorrichtung nach einem der Ansprüche 10 bis 13, **dadurch gekennzeichnet, dass** die mindestens eine Befestigungsklammer (2) zumindest teilweise aus Kunststoff besteht, insbesondere als Kunststoff-Spritzgussteil ausgebildet ist, oder dass die die mindestens Befestigungsklammer (2) zumindest teilweise aus Metall besteht, insbesondere als Stanzbiegeteil aus Federstahl ausgebildet ist.

15. Radschutzvorrichtung nach einem der Ansprüche 10 bis 14, **dadurch gekennzeichnet, dass** die Radschutzvorrichtung eine Mehrzahl von Befestigungsklammern (2) umfasst, insbesondere wobei die Radschutzvorrichtung dazu eingerichtet ist, dass die Befestigungsklammern (2) im am Fahrrad angebrachten Zustand des Radschützers (1) in Längsrichtung der Basis des Radschützers (1) voneinander beabstandet sind.
